# EUROPÄISCHE PATENTSCHRIFT

(11) **EP 1 639 466 B1**
(45) Veröffentlichungstag und Bekanntmachung des Hinweises auf die Patenterteilung: **27.02.2008**
(21) Anmeldenummer: 04738685.9
(22) Anmeldetag: 18.06.2004
(51) Int. Cl.: G06F 11/10

(54) **VERFAHREN UND VORRICHTUNG ZUR FEHLERERKENNUNG FÜR EINEN CACHESPEICHER UND ENTSPRECHENDER CACHESPEICHER**
FAILURE DETECTION METHOD AND DEVICE FOR A CACHE MEMORY, AND CORRESPONDING CACHE MEMORY
PROCEDE ET DISPOSITIF DE DETECTION D'ERREURS POUR UNE ANTEMEMOIRE ET ANTEMEMOIRE CORRESPONDANTE

(30) Priorität: 18.06.2003 DE 10327549
(43) Veröffentlichungstag der Anmeldung: 29.03.2006
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70825 Korntal (DE); KOTTKE, Thomas, 71139 Ehningen (DE)
(74) Vertreter: Svejkovsky, Peter
(86) Internationale Anmeldenummer: PCT/DE2004/001234
(87) Internationale Veröffentlichungsnummer: WO 2004/114135

(56) Entgegenhaltungen:
- WO-A-92/19046
- US-A- 4 084 236
- US-A- 4 637 024
- US-A- 5 345 582

## Beschreibung

### Stand der Technik

Die Erfindung betrifft ein Verfahren und eine Vorrichtung zur Fehlererkennung für einen Cachespeicher sowie einen entsprechenden Cachespeicher gemäß den unabhängigen Ansprüchen.

Die Taktfrequenz heutiger Prozessoren liegt typischerweise deutlich höher als die Frequenz, mit der auf einen insbesondere externen Speicher zugegriffen werden kann. Um diese Zeitdifferenz auszugleichen, werden Cachespeicher eingesetzt. Durch Zusammenarbeit eines solchen schnellen Pufferspeichers mit einem entsprechenden Hauptspeicher können dann die Zugriffszeiten deutlich reduziert werden. Bei fehlertoleranten Rechnern ist es heutzutage üblich, dass bei dem Cachespeicher die Daten über einen fehlererkennenden oder fehlerkorrigierenden Code (ECC Error Code Correction) abgesichert werden. Treten aber in der Logik des Cachespeichers Fehler auf, reicht diese Datenabsicherung nicht mehr. Durch immer kleiner werdende Strukturen, insbesondere der Logik des Cachespeichers, wird diese immer anfälliger, insbesondere gegen transiente Fehler.

Daher ist es Aufgabe der Erfindung, neben der Datenabsicherung auch weitere Fehlermöglichkeiten auszuschließen und so einen sichereren Cachespeicher darzustellen, als es der Stand der Technik zu leisten vermag.

Aus der US 5,345,582 und der US 4,084,26 sind jeweils Verfahren bekannt, die eine Signaturbildung und Überprüfung der Signatur von Adressdaten beinhaltet. Aus der WO 92/19046 ist eine Überprüfung von Daten durch Checksummen bekannt.

### Vorteile der Erfindung

Die Erfindung gemäss des Gegenstands der beiden unabhängigen Ansprüche 1 und 9 zeigt ein Verfahren und eine Vorrichtung zur Fehlererkennung für einen Cachespeicher sowie einen entsprechenden Cachespeicher zur Speicherung von Daten, wobei der Zugriff auf die im Cachespeicher abgelegten Daten durch diesen zugeordnete Adressen erfolgt und vorteilhafter Weise zu den den abgelegten Daten zugeordneten Adressen wenigstens eine erste Prüfsignatur, bestehend aus wenigstens einem ersten Signaturbit erzeugt und ebenfalls im Cachespeicher abgelegt wird.

Dadurch ist es möglich, neben der bekannten Absicherung der Cachedaten auch die Cachelogik durch Fehlererkennung und/oder Fehlerkorrektur abzusichern, so dass ein Cachespeicher implementiert werden kann, bei dem bei einem Lesezugriff alle Fehler erkannt werden können, da eine Überprüfung der ersten Prüfsignatur bei jedem Lesezugriff auf den Cachespeicher erfolgreich durchführbar ist.

Um zusätzlich Fehler im Gültigkeitsbit des Cachespeichers, also dem Validbit zu erkennen, wird dieses wenigstens doppelt abgelegt. Zweckmäßiger Weise wird das Gültigkeitsbit m-fach abgelegt und mittels eines n-aus-m-Tests überprüft, wobei m und n natürlich Zahlen sind, wobei m größer als 2 und n größer als m/2 ist. Dadurch kann mindestens Einfehlertoleranz erreicht werden.

Dabei kann das Gültigkeitsbit auch k-fach in Form eines 1 aus k Codes abgelegt werden, wobei k einer natürlichen Zahl entspricht, wodurch vorteilhafter Weise auch Mehrfachfehler erkannt werden können, da dabei nur 1 aus 2^{k} Bitkombinationen entsprechend dem 1 aus k Code gültig ist.

Besonders vorteilhaft ist der Einsatz der Erfindung bei einem Instruktionscache, also bei einem Cachespeicher, bei dem als Daten nur Instruktionen, sprich Befehle abgelegt werden. Da bei diesem nahezu ausschließlich Lesefehler zu berücksichtigen sind, kann dann das erfindungsgemäße Verfahren und die erfindungsgemäße Vorrichtung sowie ein entsprechender Cachespeicher die Absicherung bzw. Fehlererkennung und Fehlerkorrektur nahezu komplett abdecken.

Vorteilhafter Weise werden Sets bzw. Gruppen von Daten mit den entsprechenden zugehörigen ersten Prüfsignaturen zusammen unter einem ersten Zeilenindex im Cachespeicher abgelegt, wobei dieser erste Zeilenindex aus dem Cachespeicher durch Zeilendecodierung wiedergewonnen wird und mit einem angelegten zweiten Zeilenindex auf Übereinstimmung verglichen wird.

Abhängig von dem jeweiligen Vergleich der Prüfsignaturen oder des Gültigkeitsbits oder des durch Zeilendecodierung rückgewonnenen Zeilenindexes wird entsprechend ein Fehlersignal erzeugt. Dieses kann zum Einen generell erzeugt werden, also unterschiedlich bei erkanntem Fehler und bei erkannter Übereinstimmung, oder es wird lediglich bei erkanntem Fehler ein solches Fehlersignal erzeugt.

Zweckmäßiger Weise wird dieses Fehlersignal bei erkanntem Fehler dann als Cache-Miss-Signal behandelt, was zur Folge hat, dass solch fehlerhafte Daten bzw. Adressen nicht verwendet, sondern korrigiert oder ersetzt werden.

Werden vorteilhafter Weise bei Erkennung eines Fehlers die Daten bzw. Instruktionen erneut aus dem Hintergrundspeicher in den Cachespeicher geladen kann damit ein hoch verfügbares fehlertolerantes System erzielt werden, welches sich darüber hinaus durch kostengünstige Fehlererkennungsmechanismen auszeichnet.

Weitere Vorteile und vorteilhafte Ausgestaltungen ergeben sich aus der Beschreibung sowie den Merkmalen der Ansprüche.

### Zeichnung

Im Weiteren wird die Erfindung anhand der in der Zeichnung dargestellten Figuren näher erläutert. Dabei zeigt
Figur 1 ein Beispiel für ein erfindungsgemäßes Cachespeichersystem und
Figur 2 zeigt symbolisch den Cachespeicher und die erfindungsgemäß vorgenommenen Vergleiche zur Fehlererkennung.

### Ausführungsbeispiele

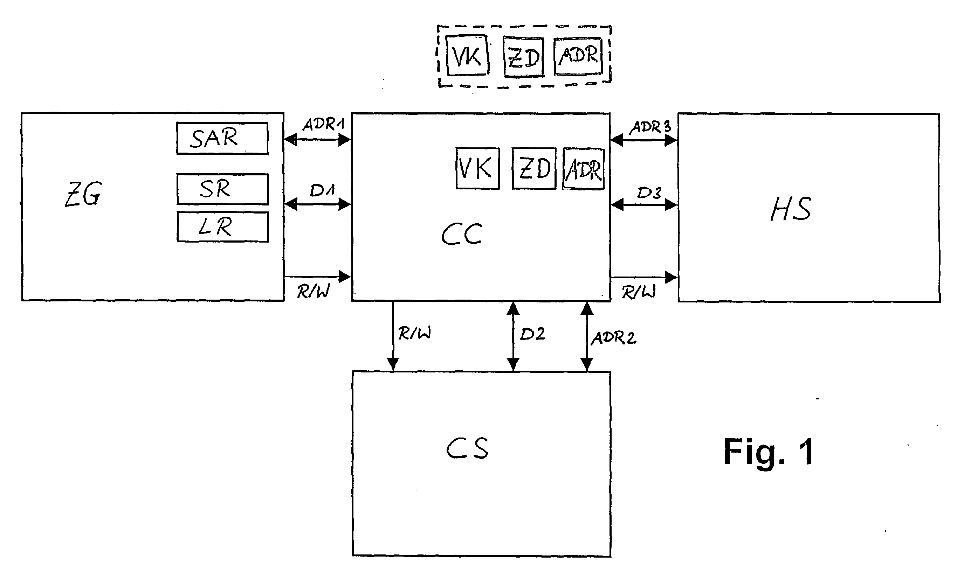

Figur 1 zeigt dabei einen Vordergrundspeicher oder Cachespeicher CS und einen Hauptspeicher oder Hintergrundspeicher HS. Weiterhin abgebildet ist ein Zugriffsgenerator ZG, der beispielsweise einer Central Processing Unit entspricht. Zwischen die Einheit, die Daten anfordert bzw. ändert, also den Zugriffsgenerator ZG und den Hintergrundspeicher HS wird eine Steuerung, der sogenannte Cachecontroller CC geschaltet, welcher die Daten im Cachespeicher CS ablegt und so für weitere Zugriffe vorrätig hält. Der Zugriffsgenerator und der Cachecontroller sind über eine Adressleitung ADR1, eine Datenleitung D1 und eine Schreib-/Leseleitung R/W miteinander verbunden. Ebenso ist der Cachecontroller CC mit dem Cachespeicher CS über eine Adressleitung ADR2, eine Datenleitung D2 sowie eine Schreib-/Leseleitung R/W verbunden. Solche Verbindungen bestehen auch zwischen Cachecontroller CC und Hauptspeicher HS mit Adressleitung ADR3, Datenleitung D3 und der Schreib-/Leseleitung R/W.

Ist nur eine Übertragungsrichtung notwendig, z. B. beim ausschließlichen Lesen von Befehlen aus dem Arbeitsspeicher bei einem Instruktionscache, also einem Cachespeicher, in dem nur Instruktionen abgelegt werden, können die R/W-Leitungen, also die Schreib-/Leseleitungen zwischen Zugriffsgenerator ZG und Cachecontroller CC sowie zwischen Cachecontroller CC und Hintergrundspeicher HS entfallen. Allerdings muss der Cachecontroller CC auf den Vordergrundspeicher oder Cachespeicher CS immer schreiben und lesen können, so dass die R-/W-Leitung zwischen Cachecontroller CC und Cachespeicher CS auch bei einem Instruktionscache erhalten bleibt.

Zugriffswünsche bestehen somit aus einer Adresse und bei Schreibzugriffen den neuen Daten sowie bei einem nicht reinen Instruktionscache der Zugriffsart, also Lesen oder Schreiben übertragen über die R/W Read-Write-Leitung. Der Zugriffsgenerator ZG sendet solche Anforderungen oder Wünsche an den Cachecontroller CC, der diese bedient, und zwar durch geeignete Anforderungen an Cachespeicher CS und/oder Hintergrundspeicher HS. Handelt es sich bei dem Zugriffsgenerator um eine Central Processing Unit CPU oder ist dieser in der CPU enthalten, so steht die Zugriffsadresse im Allgemeinen in einem Speicheradressregister SAR und die zu schreibenden Daten in einem Schreibregister SR, wohingegen gelesene Daten im Allgemeinen in einem Leseregister LR aufgenommen werden.

Um die erfindungsgemäßen und nachfolgend noch zu erläuternden Vergleiche durchzuführen, ist eine Vergleicherkomponente VK vorgesehen. Zur Wiedergewinnung eines Zeilenindex ist ein Zeilendecodierer ZD vorgesehen, und für die Rückgewinnung der Adressinformation zum erfindungsgemäßen Vergleich ist ein Adressblock ADR vorgesehen. Je nach Anwendung kann eine unterschiedliche Anzahl von Vergleichern in der Vergleicherkomponente VK vorgesehen werden. Ebenso ist die Anwendung der Blöcke VK, ZD und ADR nicht fest und kann je nach Anwendung variieren, insbesondere können diese Blöcke vorteilhafter Weise in beliebiger Zusammensetzung auch extern zum Cachecontroller CC lokalisiert sein und mit diesem in Verbindung stehen.

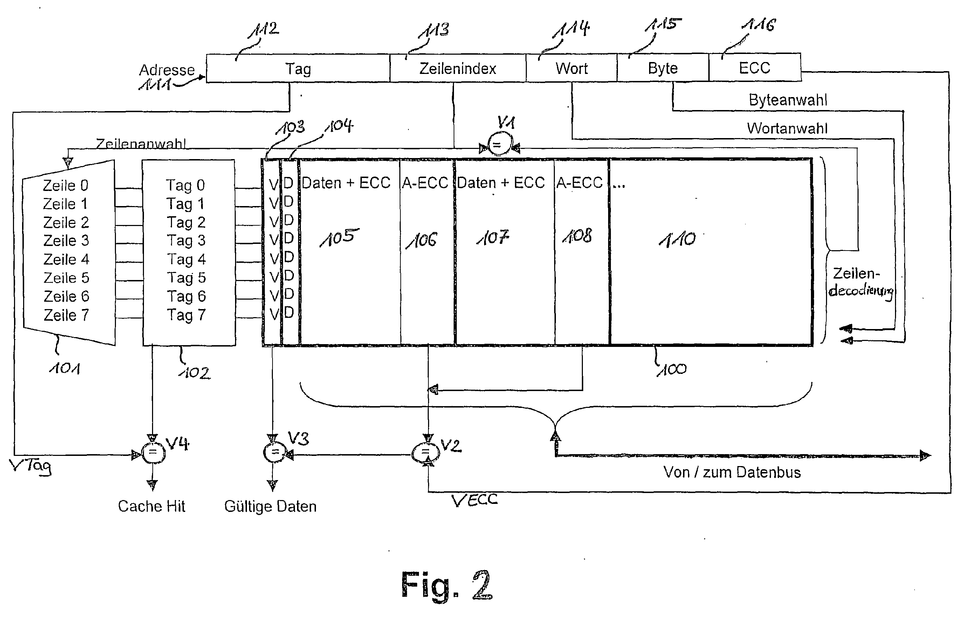

Figur 2 zeigt nun erfindungsgemäße Methoden zur Fehlererkennung beim Cachespeicher, wobei die Grundvoraussetzung für den Einsatz dieses Cachespeichers die Absicherung der Adressen mit einem Fehlererkennungs- bzw. Fehlerkorrekturcode, also einer Signatur darstellt. Im einfachsten Fall kann diese Signatur nur aus einem Signaturbit, beispielsweise einem Paritybit bestehen. Andererseits kann die Absicherung auch durch komplexere ED-Codes (Error Detection) wie einen Berger-Code oder einen Bose-Lin-Code usw., oder auch durch einen komplexeren ECC-Code (Error Check and Correction) wie beispielsweise einen Hamming-Code, usw. realisiert werden, um durch entsprechende Bitzahl eine sicherere Fehlererkennung zu ermöglichen. Es kann aber auch als Codegenerator, beispielsweise eine Generatortabelle (fest verdrahtet oder in Software) verwendet werden, um bestimmten Eingangsmustern der Bits im Rahmen der Adresse ein gewünschtes Codemuster beliebiger Länge zuzuordnen.

In Figur 2 ist ein solcher Cachespeicher 100 symbolisch dargestellt. Darin sind die Bereiche 103, 104, 105, 106, 107, 108 und 110 unterschieden. In den Bereichen 105 und 107 und ff. auch in 110 usw. werden die jeweiligen Daten im Cachespeicher abgelegt, ergänzt durch eine ECC-Signatur, um Fehler in den im Cache abgelegten Daten zu erkennen. Die Adresssignatur A-ECC ist hier in den Blöcken 106, 108 sowie 110 und ff. abgelegt und den entsprechenden Daten gemäß der Adresse zugeordnet. Im Beispiel besteht eine solche Adresse 111 aus einem Block 112, der einen Tag oder eine Kennung enthält, welches anzeigt, zu welcher Anfangsadresse der entsprechende Datenblock wirklich gehört, da, wie in Figur 2 dargestellt, mehrere Bereiche des Hintergrundspeichers siehe Daten 105 und 107 in eine Zeile bzw. einen Set abgebildet werden. In diesem Beispiel enthält gemäß Block 102 ein Set oder eine Zeile 8 Tags von Tag 0 bis Tag 7. Block 113 enthält den Zeilenindex, durch welchen die Zeilenanwahl, hier von Zeile 0 bis Zeile 7 gemäß Block 101 erfolgt. Weiterhin und optional sind Block 114 und Block 115 die der Wort- bzw. Byteanwahl innerhalb einer Zeile und eines Tags dienen. Die Felder 114 und 115 hängen stark von der verwendeten Wortbreite der einzelnen Datenfelder ab und sind nicht zwingend. Feld 116 enthält dann die Prüfsignatur der Adresse 111, also der Felder 112 bis 115.

Es gibt nun zwei grundsätzliche Arten von Fehlern im Cachespeicher: Zum Einen Fehler, in den im Cachespeicher abgelegten Daten und zum Anderen Fehler in der Cachelogik, insbesondere dem Cachecontroller. Daten, die in einem Cachespeicher sind, sind immer noch an einer anderen Stelle im Hauptspeicher bzw. Hintergrundspeicher oder sogar in einem nicht flüchtigen Speicher abgelegt. Wenn sichergestellt ist, dass die Daten in beiden Speichern konsistent sind, also Cachespeicher und Hintergrundspeicher müssen Fehler in den Daten im Cachespeicher folglich nur erkannt, aber nicht korrigiert werden. Dieses Erkennen kann durch Absicherung der Daten mit einem ED-Code oder einem ECC-Code, wie in Figur 2 dargestellt, geschehen. Sind die Daten nicht konsistent, z.B. bei einem Datencache kann ein ECC-Code wie in Figur 2 verwendet werden.

Beim Erkennen von Fehlern in der Cachelogik wird bei einem lesenden Zugriff auf ein Datenwort im Cachespeicher bei einem direkt zuordnenden Cache zuerst mit der Zeilenanwahl, also dem Zeilenindex, die entsprechende Cachespeicherzeile ausgewählt. Anschließend wird in dieser Zeile überprüft, ob das Tagfeld 112 in dieser Zeile stimmt entsprechend Block 102 und vgl. V4, in dem das Tagfeld über den Tagfeldvergleich VTag gemäß V4 mit dem Tag aus Block 102 verglichen wird und sich bei Übereinstimmung ein Cachehit vergibt. Ist dies der Fall, also bei Cachehit, so wird bei einem gültigen Validbit V das entsprechende Wort aus der Zeile ausgelesen. Fehler in diesem Bereich der Cachelogik können in der Zeilenanwahl, dem Tagspeicher 102 und dem Komparator für das Tagfeld auftreten. Diese Fehler wirken sich darin aus, dass auf die falsche Zeile oder auf falsche Daten im Cachespeicher zugegriffen wird.

Um Fehler im Gültigkeitsbit, also dem Validbit zu erkennen, muss dies wenigstens dupliziert werden, wird also beispielsweise in Feld 103 oder in einem anderen Feld doppelt abgelegt. Vorteilhaft ist auch ein n-aus-m-Code, also ein n-aus-m-Test, so dass bei gleichartigem Kippen mehrerer Bits durch einen Kopplungsfehler immer noch eine Erkennung stattfinden kann, wobei n und m natürliche Zahlen sind, wobei m > 2 und n > m/2 ist. Wodurch wenigstens eine Einfehlertoleranz gewährleistet werden kann.

Dabei kann das Gültigkeitsbit auch k-fach in Form eines 1 aus k Codes abgelegt werden, wobei k einer natürlichen Zahl entspricht, wodurch vorteilhafter Weise auch Mehrfachfehler bei Bittkippern erkannt werden können, da dabei nur eine Bitkombination aus 2^{k} Bitkombinationen entsprechend dem 1 aus k Code gültig ist und somit durch Vergleich beliebige Abweichungen von der gültigen Bitkombination erkennbar sind.

Dabei gibt das Valid- oder Gültigkeitsbit an, ob in der Cachespeicherzelle überhaupt gültige Daten vorhanden sind, da sowohl das Tagfeld als auch der Datenblock immer ein Bitmuster enthalten. Die Daten entsprechen aber anfangs nicht dem und der Adresse stehenden Wert im Hintergrundspeicher. Auch hier können individuelle Flags für Teile des Blocks vorhanden sein. In Abschnitt 104 ist ein sogenanntes Verändert- oder Dirty-Flag bzw. Bitmuster D vorgesehen, welches angibt, ob der Inhalt des Datenblocks noch mit dem Hintergrundspeicher übereinstimmt oder gelesen und anschließend verändert wurde, aber noch nicht zurückgeschrieben ist.

So werden nun die Prüfsignaturen aus den Abschnitten 106 bzw. 108 usw., also A-ECC mit dem entsprechenden Prüfmuster, also der Prüfsignatur entsprechend Block 116 gemäß Pfeil V-ECC und V2 verglichen und das Ergebnis dann entsprechend V3 mit dem korrekten geprüften Validbit überprüft, um dann bei Übereinstimmung die Aussage "gültige Daten" zu erhalten.

Die Zeilenanwahl lässt sich erfindungsgemäß als Zeilendecoder oder Zeilendecodierung betrachten. Fehler werden hier durch Zurückdecodieren der ausgewählten Zeile und Vergleich der daraus gewonnenen Adresse mit dem angewählten Zeilenindex erkannt, wie dies über Vergleich V 1 dargestellt ist.

Die zusätzlich zu den in einem gängigen Cachespeicher vorgesehenen Komparatoren, also Vergleicher, hier symbolisch mit V1 bis V4 bezeichnet, können in der in Figur 1 dargestellten Vergleichskomponente VK gesammelt untergebracht sein. Die Bildung des jeweiligen Adress-ECC erfolgt im Block ADR gemäß Figur 1, und die Zeilendecodierung im Block ZD. Die Bildung des jeweiligen Adress-ECC kann auch in der CPU der Recheneinheit also insbesondere in ZG erfolgen.

Bei der Überprüfung des Tagfelds und eventuell auftretenden Fehlern geschieht der Vergleich einer besonderen Ausführungsform bitweise. Dann kann also im Fehlerfall von einem Einfachfehler ausgegangen werden. Dieser Einfachfehler wird dann durch den Fehlererkennungscode der Adresse A-ECC, der mit den entsprechenden Daten abgelegt ist, erkannt. Somit können dann alle Fehler, eben auch transiente Fehler, im Cachespeicher erkannt werden. Dies gilt für den beschriebenen Einfachfehlerfall selbst dann, wenn für die Adressabsicherung lediglich ein Prüfbit, insbesondere ein Paritybit verwendet wird. Fehler in der Wortauswahl werden ebenfalls durch Vergleich der mitgespeicherten Prüfsignatur der Adresse erkannt.

Das erfindungsgemäße Verfahren, die Vorrichtung und der entsprechende Cachespeicher kann auch eingesetzt werden, um bestimmte Fehler beim Schreiben auf einen Cachespeicher zu selektieren. Tritt bei einem Schreiben in den Cachespeicher durch einen Fehler des Cachecontrollers CC ein Adressierungsfehler auf, so kann die falsche Zeilenadresse, also der falsche Zeilenindex ebenfalls durch den Zeilendecodierer erkannt werden. Wird das Tagfeld verfälscht, so wird der Fehler durch den mit den Daten gespeicherten Fehlererkennungscode beim Wiederauslesen der Daten erkannt Ebenso werden Fehler in den Adresscodierungsbits ebenfalls beim Auslesen erkannt.

Bei einem reinen Instruktionscache, also einem Cachespeicher, in dem nur Befehle als Daten abgelegt sind, können fast ausschließlich Lesefehler berücksichtigt werden, so dass dann ein Fehler durch die Fehlererkennung beim Auslesen sofort erkannt wird.

Werden bei Erkennung eines Fehlers die Daten bzw. Instruktionen erneut aus dem Hintergrundspeicher in den Cachespeicher geladen kann damit ein hoch verfügbares fehlertolerantes System erzielt werden, welches sich darüber hinaus durch kostengünstige Fehlererkennungsmechanismen auszeichnet. Dabei kann ein solches wiederholtes Laden aus dem Hintergrundspeicher von zwei Faktoren abhängig gemacht werden und zwar zum einen vom Fehler bzw. der jeweiligen Fehlererkennung und zum anderen vom Daten- bzw. Instruktionsabschnitt in dem der Fehler auftrat. D.h. im einfachsten Fall werden bei Auftritt eines Fehlers die Daten (also Daten und/oder Instruktionen) komplett erneut aus dem Hintergrundspeicher in den Cachespeicher geladen. Abhängig von bestimmten Fehlern entsprechend der vorgenannten Fehlererkennungsmechanismen können auch nur Teile des zuletzt geladenen Datenbestandes erneut geladen werden (z.B. je gravierender der Fehler desto größere Datenanteile). Abhängig von diesen beiden Faktoren sind dann beliebige Abstufungen und Beziehungen möglich.

Damit kann entsprechend der erfindungsgemäßen Verfahren und Vorrichtungen sowie Cachespeichern ein sicherer und hochverfügbarer Cachespeicher angegeben werden, der auf kostengünstige Weise sowohl gegen Fehler in den Daten als auch gegen Fehler in der Cachelogik abgesichert ist.

## Patentansprüche

1. Verfahren zur Fehlererkennung bei einem Cachespeicher zur Speicherung von Daten, wobei der Zugriff auf die im Cachespeicher abgelegten Daten durch diesen zugeordnete Adressen erfolgt, wobei zu den, den abgelegten Daten zugeordneten Adressen, wenigstens eine erste Prüfsignatur bestehend aus wenigstens einem ersten Signaturbit erzeugt und ebenfalls im Cachespeicher abgelegt wird, wobei das wenigstens eine abgelegte erste Signaturbit der ersten Prüfsignatur mit einem zweiten Signaturbit einer zweiten Prüfsignatur, die aus einer am Cachespeicher angelegten Adresse gebildet oder mitübergeben wird, verglichen wird, **dadurch gekennzeichnet, dass** einer Gruppe von Daten und den zugehörigen ersten Prüfsignaturen jeweils ein erster Zeilenindex im Cachespeicher zugeordnet wird und mit einem zweiten am Cachespeicher angelegten Zeilenindex verglichen wird, wobei dieser erste Zeilenindex durch Zeilendecodierung aus dem Cachespeicher wiedergewonnen wird.

2. Verfahren nach Anspruch 1, **dadurch gekennzeichnet, dass** eine Überprüfung der ersten Prüfsignatur bei jedem Lesezugriff auf den Cachespeicher erfolgt.

3. Verfahren nach Anspruch 1 oder 2, **dadurch gekennzeichnet, dass** ein Gültigkeitsbit im Cachespeicher wenigstens doppelt abgelegt wird.

4. Verfahren nach Anspruch 3, **dadurch gekennzeichnet, dass** das Gültigkeitsbit m-fach abgelegt wird und mittels n aus m Test überprüft wird, wobei m, n natürliche Zahlen sind und m > 2 und m > n > m/2.

5. Verfahren nach Anspruch 3 **dadurch gekennzeichnet, dass** das Gültigkeitsbit k-fach als Bitkombination in Form eines 1 aus k Codes abgelegt wird, wobei durch Vergleich 1 Bitkombination aus 2^{k} Bitkombinationen als gültig erkannt wird, wobei k einer natürlichen Zahl entspricht.

6. Verfahren nach einem der vorhergehenden Ansprüche, **dadurch gekennzeichnet, dass** die Daten nur aus Instruktionen bestehen.

7. Verfahren nach einem der vorhergehenden Ansprüche, **dadurch gekennzeichnet, dass** abhängig vom jeweiligen Vergleichsergebnis ein Fehlersignal erzeugt wird.

8. Verfahren nach Anspruch 7, **dadurch gekennzeichnet, dass** das Fehlersignal als Cache-Miss-Signal behandelt wird.

9. Verfahren nach einem der vorhergehenden Ansprüche, **dadurch gekennzeichnet, dass** abhängig vom jeweiligen Vergleichsergebnis wenigstens ein Fehler erkannt wird und bei Erkennung eines Fehlers die Daten erneut in den Cachespeicher geladen werden.

10. Cachespeicher mit einer Vorrichtung zur Fehlererkennung, wobei der Zugriff auf die im Cachespeicher abgelegten Daten durch diesen zugeordnete Adressen erfolgt, wobei zu den, den abgelegten Daten zugeordneten Adressen wenigstens eine erste Prüfsignatur bestehend aus wenigstens einem ersten Signaturbit erzeugt wird und diese erste Prüfsignatur im Cachespeicher abgelegt ist, wobei Mittel (V2) vorgesehen sind die das wenigstens eine abgelegte erste Signaturbit der ersten Prüfsignatur mit einem zweiten Signaturbit einer zweiten Prüfsignatur, die aus einer am Cachespeicher angelegten Adresse gebildet oder mitübergeben wird, vergleicht, **dadurch gekennzeichnet, dass** weitere Mittel (V1) vorgesehen sind, die einen ersten Zeilenindex, der einer Gruppe von Daten und den zugehörigen ersten Prüfsignaturen im Cachespeicher zugeordnet ist, mit einem zweiten am Cachespeicher angelegten Zeilenindex vergleicht, wobei der erste Zeilenindex durch Zeilendecodierung aus dem Cachespeicher wiedergewonnen wurde.

## Claims

1. Method for error recognition in a cache store for storing data, where the data stored in the cache store are accessed using addresses associated with them, where at least one first test signature comprising at least one first signature bit is produced for the addresses associated with the stored data and is likewise stored in the cache store, and where the at least one stored first signature bit from the first test signature is compared with a second signature bit from a second test signature which is formed or concurrently transferred from an address created on the cache store, **characterized in that** a group of data and the associated first test signatures are respectively assigned a first line index in the cache store and said line index is compared with a second line index created on the cache store, this first line index being recovered from the cache store by means of line decoding.

2. Method according to Claim 1, **characterized in that** the first test signature is checked upon every read access to the cache store.

3. Method according to Claim 1 or 2, **characterized in that** a validity bit is stored at least in duplicate in the cache store.

4. Method according to Claim 3, **characterized in that** the validity bit is stored m times and is checked using an n-out-of-m test, where m and n are natural numbers and m > 2 and m > n > m/2.

5. Method according to Claim 3, **characterized in that** the validity bit is stored k times as a bit combination in the form of a 1-out-of-k code, where comparison identifies 1 bit combination out of 2^{k} bit combinations as valid, k corresponding to a natural number.

6. Method according to one of the preceding claims, **characterized in that** the data comprise only instructions.

7. Method according to one of the preceding claims, **characterized in that** an error signal is produced on the basis of the respective comparison result.

8. Method according to Claim 7, **characterized in that** the error signal is treated as a Cache-Miss signal.

9. Method according to one of the preceding claims, **characterized in that** at least one error is recognized on the basis of the respective comparison result and recognition of an error prompts the data to be reloaded into the cache store.

10. Cache store having an apparatus for error recognition, where the data stored in the cache store are accessed using addresses associated with them, where at least one first test signature comprising at least one first signature bit is produced for the addresses associated with the stored data and this first test signature is stored in the cache store, and where means (V2) are provided which compare the at least one stored first signature bit from the first test signature with a second signature bit from a second test signature which is formed or concurrently transferred from an address created on the cache store, **characterized in that** further means (V1) are provided which compare a first line index, which is associated with a group of data and the associated first test signatures in the cache store, with a second line index created on the cache store, the first line index having been recovered from the cache store by means of line decoding.

## Revendications

1. Procédé de détection d'erreurs pour une antémémoire pour la sauvegarde de données, l'accès aux données stockées dans l'antémémoire ayant lieu par les adresses lui étant associées, au moins une première signature de contrôle composée d'au moins un premier bit de signature étant générée parmi les adresses associées aux données stockées et enregistrée le cas échéant dans l'antémémoire, l'au moins un premier bit de signature stocké de la première signature de contrôle étant comparé à un deuxième bit de signature d'une deuxième signature de contrôle communiquée ou formée à partir d'une adresse stockée dans l'antémémoire,
**caractérisé en ce qu'**
un premier indice de ligne est associé dans l'antémémoire à un groupe de données et de premières signatures de contrôle correspondantes et est comparé à un deuxième indice de ligne stocké dans l'antémémoire, ce premier indice de ligne étant récupéré par le décodage des lignes issu de l'antémémoire.

2. Procédé selon la revendication 1,
**caractérisé en ce qu'**
un contrôle de la première signature de contrôle a lieu pour chaque accès de lecture à l'antémémoire.

3. Procédé selon la revendication 1 ou 2,
**caractérisé en ce qu'**
un bit de validité est enregistré au moins deux fois dans l'antémémoire.

4. Procédé selon la revendication 3,
**caractérisé en ce que**
le bit de validité est enregistré plusieurs fois et est contrôlé à l'aide de n à partir de m tests, m et n étant des entiers naturels et m > 2 et m > n > m/2.

5. Procédé selon la revendication 3,
**caractérisé en ce que**
le bit de validité est enregistré k fois en tant que combinaison de bits sous la forme de 1 composé de k codes, à titre de comparaison, 1 combinaison de bits à partir de 2^{k} combinaison de bits étant considérée comme valable, k correspondant à un entier naturel.

6. Procédé selon l'une des revendications précédentes,
**caractérisé en ce que**
les données ne se composent que d'instructions.

7. Procédé selon l'une des revendications précédentes,
**caractérisé en ce qu'**
un signal d'erreur est généré en fonction du résultat de comparaison correspondant.

8. Procédé selon la revendication 7,
**caractérisé en ce que**
le signal d'erreur est traité en tant que signal d'erreur d'antémémoire.

9. Procédé selon l'une des revendications précédentes,
**caractérisé en ce qu'**
en fonction du résultat de comparaison respectif au moins une erreur est détectée et les données sont à nouveau chargées dans l'antémémoire lors de la détection d'une erreur.

10. Antémémoire dotée d'un dispositif de détection des erreurs, l'accès aux données enregistrées dans l'antémémoire ayant lieu par les adresses lui étant associées, au moins une première signature de contrôle composée d'au moins un premier bit de signature étant générée parmi les adresses associées aux données stockées et cette première signature de contrôle étant enregistrée le cas échéant dans l'antémémoire, des moyens (V2) étant prévus pour comparer l'au moins un premier bit de signature stocké de la première signature de contrôle à un deuxième bit de signature d'une deuxième signature de contrôle communiquée ou formée à partir d'une adresse stockée dans l'antémémoire,
**caractérisé en ce que**
d'autres moyens (V1) sont prévus pour associer le premier indice de ligne dans l'antémémoire à un groupe de données et de premières signatures de contrôle correspondantes et pour comparer à un deuxième indice de lignes stocké dans l'antémémoire, ce premier indice de ligne étant récupéré par le décodage des lignes issues de l'antémémoire.
